# EUROPEAN PATENT APPLICATION

(11) **EP 4 317 910 A1**
(43) Date of publication of application: **07.02.2024**
(21) Application number: 22779660.4
(22) Date of filing: 22.02.2022
(51) Int. Cl.: G01B 11/02, A01K 61/95, G06T 7/00, G06T 7/194, G06T 7/593, G06T 7/62

(54) **COMPUTER PROGRAM, MODEL GENERATION METHOD, ESTIMATION METHOD AND ESTIMATION DEVICE**

(30) Priority: 31.03.2021 JP 2021060624
(71) Applicant: Furuno Electric Co., Ltd., Nishinomiya-City, Hyogo 662-8580 (JP)
(72) Inventor: IKEGAMI, Atsushi, Nishinomiya-City, Hyogo 662-8580 (JP); NAKAMURA, Satoshi, Nishinomiya-City, Hyogo 662-8580 (JP)
(74) Representative: CSY London
(86) International application number: PCT/JP2022/007299
(87) International publication number: WO 2022/209435

(57) **Abstract**

The present disclosure provides a computer program, a model generating method, an estimating method, and an estimating device, which are capable of estimating the size of an underwater life form. The computer program causes a computer to perform processing which includes acquiring image data obtained by imaging an underwater life form, inputting the acquired image data into a first trained model which outputs position data of a given element of the underwater life form in response to the input of the image data, and acquiring the position data of the given element of the imaged underwater life form, inputting the acquired image data into a generating model which generates a segmentation image of the underwater life form in response to the input of the image data, and generating the segmentation image of the imaged underwater life form, and estimating a size of the imaged underwater life form based on the position data of the given element and the segmentation image.

## Description

### TECHNICAL FIELD

The present disclosure relates to a computer program, a model generating method, an estimating method, and an estimating device.

### BACKGROUND ART

The size of cultured fish in a fish preserve is important information for determining an amount of feeding and a fish landing schedule. Conventionally, a plurality of analysis services for automating underwater fish length measurement are provided. These services extract a plurality of characteristic points of fish, and measure a distance between the characteristic points (for example, between a mouth tip and a fork) to measure the length.

Patent Document 1 discloses an information processing device which detects two characteristic parts (a mouth and a caudal fin) of fish from a photography image where the fish is imaged, and calculates the size of fish based on a length between the detected characteristic parts.

### [Reference Document(s) of Conventional Art]

### [Patent Document]

[Patent Document 1] WO2018/061925A1

### DESCRIPTION OF THE DISCLOSURE

### [Problem(s) to be Solved by the Disclosure]

However, since optimal parts for body depth measurement of fish are not necessarily characteristic, the body depth cannot be measured with sufficient accuracy in terms of the measurement accuracy and the biological stability, and therefore, it is difficult to estimate the size of an underwater life form, such as fish.

The present disclosure is made in view of this situation, and one purpose thereof is to provide a computer program, a model generating method, an estimating method, and an estimating device, which are capable of estimating the size of an underwater life form.

### [Summary of the Disclosure]

A computer program according to the present disclosure causes a computer to perform processing which includes acquiring image data obtained by imaging an underwater life form, inputting the acquired image data into a first trained model which outputs position data of a given element of the underwater life form in response to the input of the image data, and acquiring the position data of the given element of the imaged underwater life form, inputting the acquired image data into a generating model which generates a segmentation image of the underwater life form in response to the input of the image data, and generating the segmentation image of the imaged underwater life form, and estimating a size of the imaged underwater life form based on the position data of the given element and the segmentation image.

According to the computer program of the present disclosure, the processing may include inputting the acquired image data into a second trained model which outputs first position data of the underwater life form, and second position data of the given element of the underwater life form in response to the input of the image data, and outputting the first position data and the second position data, inputting image data of a second area including the second position data into the first trained model, and inputting image data of a first area including the first position data into the generating model.

According to the computer program of the present disclosure, the given element may include a caudal fin and a snout tip. The processing may include calculating a body depth based on a straight line perpendicular to a straight line connecting the caudal fin with the snout tip.

According to the computer program of the present disclosure, the processing may include inputting image data captured by a stereoscopic camera into the first trained model, and calculating three-dimensional position of a snout tip and a fork based on the acquired position data of the given element, generating a body depth auxiliary line based on the calculated three-dimensional positions, and calculating a body depth by two-dimensionally projecting the generated body depth auxiliary line on the segmentation image.

According to the computer program of the present disclosure, the processing may include calculating the body depth using the body depth auxiliary line at a position of a given ratio of a distance between the snout tip and the fork, from a position of the snout tip or the fork.

According to the computer program of the present disclosure, the processing may include inputting image data of each of a plurality of frames imaged by a stereoscopic camera into the first trained model, and calculating a three-dimensional position of a fork for every frame based on the acquired position data of the given element, identifying a displacement of the fork for every frame based on the calculated three-dimensional position of the fork, and selecting a frame for estimating the size of the underwater life form based on the identified displacement.

According to the computer program of the present disclosure, the processing may include displaying an estimated position of a caudal fin or a snout tip based on the position data outputted from the first trained model, accepting a correction of the displayed estimated position of the caudal fin or the snout tip, and retraining the first trained model based on the accepted corrected position, and image data when accepting the corrected position.

According to the computer program of the present disclosure, the processing may include displaying the segmentation image generated by the generating model, accepting a correction of the displayed segmentation image, and retraining the generating model based on the corrected segmentation image, and the image data when accepting the correction.

According to the computer program of the present disclosure, the processing may include displaying an image of the underwater life form cultivated in a fish preserve, with a fork length or a body depth.

According to the computer program of the present disclosure, the processing may include classifying accuracies of estimated sizes of a plurality of underwater life forms cultivated in a fish preserve into a plurality of ranks, and displaying a number of underwater life forms for every classified rank.

According to the computer program of the present disclosure, the processing may include displaying a distribution of the size including at least one of a fork length or a body depth of a plurality of underwater life forms cultivated in a fish preserve.

A model generating method according to the present disclosure includes acquiring first training data including image data obtained by imaging an underwater life form and position data of a given element of the underwater life form, acquiring second training data including the image data and a segmentation image of the underwater life form, generating a first trained model based on the first training data to output a position data of the given element of an underwater life form in response to an input of an image data obtained by imaging the underwater life form, and generating a generating model based on the second training data to generate a segmentation image of an underwater life form in response to an input of an image data obtained by imaging the underwater life form.

The model generating method of the present disclosure may include acquiring third training data including image data obtained by imaging an underwater life form, first position data of the underwater life form and second position data of the given element of the underwater life form, and generating a second trained model based on the third training data to output a first position data of an underwater life form and a second position data of the given element of the underwater life form in response to an input of an image data obtained by imaging the underwater life form.

An estimating method according to the present disclosure includes acquiring image data obtained by imaging an underwater life form, inputting the acquired image data into a first trained model which outputs position data of a given element of the underwater life form in response to the input of the image data, and acquiring the position data of the given element of the imaged underwater life form, inputting the acquired image data into a generating model which generates a segmentation image of the underwater life form in response to the input of the image data, and generating the segmentation image of the imaged underwater life form, and estimating a size of the imaged underwater life form based on the position data of the given element and the segmentation image.

An estimating device according to the present disclosure includes a first acquirer, a second acquirer, a generator, and an estimator. The first acquirer acquires image data obtained by imaging an underwater life form. The second acquirer accepts an input of the image data acquired by the first acquirer into a first trained model which outputs position data of a given element of the underwater life form in response to the input of the image data, and acquires the position data of the given element of the imaged underwater life form. The generator accepts an input of the image data acquired by the first acquirer into a generating model which generates a segmentation image of the underwater life form in response to the input of the image data, and generates the segmentation image of the imaged underwater life form. The estimator estimates a size of the imaged underwater life form based on the position data of the given element and the segmentation image.

### [Effect of the Disclosure]

According to the present disclosure, it is possible to estimate the size of an underwater life form.

### BRIEF DESCRIPTION OF DRAWINGS

Fig. 1 is a block diagram illustrating one example of a configuration of an estimating device of one embodiment.
Fig. 2 is a schematic diagram illustrating one example of a configuration of an AI part.
Fig. 3 is a schematic diagram illustrating a flow of estimation of the size of fish.
Fig. 4 is a schematic diagram illustrating one example of a configuration of a second trained model.
Fig. 5 is a schematic diagram illustrating one example of a configuration of a first trained model.
Fig. 6 is a schematic diagram illustrating one example of a configuration of a generating model.
Figs. 7A, 7B, and 7C are schematic diagrams illustrating examples of a method of generating each model by machine learning.
Fig. 8 is a schematic diagram illustrating one example of fish frame pairing between cameras.
Figs. 9A and 9B are views illustrating one example of pair lists of a fish frame and an element frame.
Fig. 10 is a schematic diagram illustrating one example of pairing of fish and an element.
Fig. 11 is a view illustrating one example of a fish list.
Fig. 12 is a block diagram illustrating one example of a configuration of a tracker.
Fig. 13 is a block diagram illustrating one example of a configuration of a tail beat removing part.
Fig. 14 is a schematic diagram illustrating one example of an approximation straight line of a fork track.
Fig. 15 is a block diagram illustrating one example of a configuration of a measuring part.
Figs. 16A and 16B are schematic diagrams illustrating examples of body depth measurement.
Fig. 17 is a schematic diagram illustrating one example of automatic measurement of the size of fish.
Fig. 18 is a schematic diagram illustrating one example of a configuration of an estimation result DB.
Fig. 19 is a block diagram illustrating another example of the configuration of the estimating device of this embodiment.
Fig. 20 is a schematic diagram illustrating a first indication example of an estimation result.
Figs. 21A and 21B are schematic diagrams illustrating examples of an error factor.
Fig. 22 is a schematic diagram illustrating a second indication example of the estimation result.
Fig. 23 is a schematic diagram illustrating a third indication example of the estimation result.
Fig. 24 is a schematic diagram illustrating a fourth indication example of the estimation result.
Fig. 25 is a flowchart illustrating one example of a procedure of the estimating device.
Fig. 26 is a flowchart illustrating one example of the procedure of the estimating device.

### MODE FOR CARRYING OUT THE DISCLOSURE

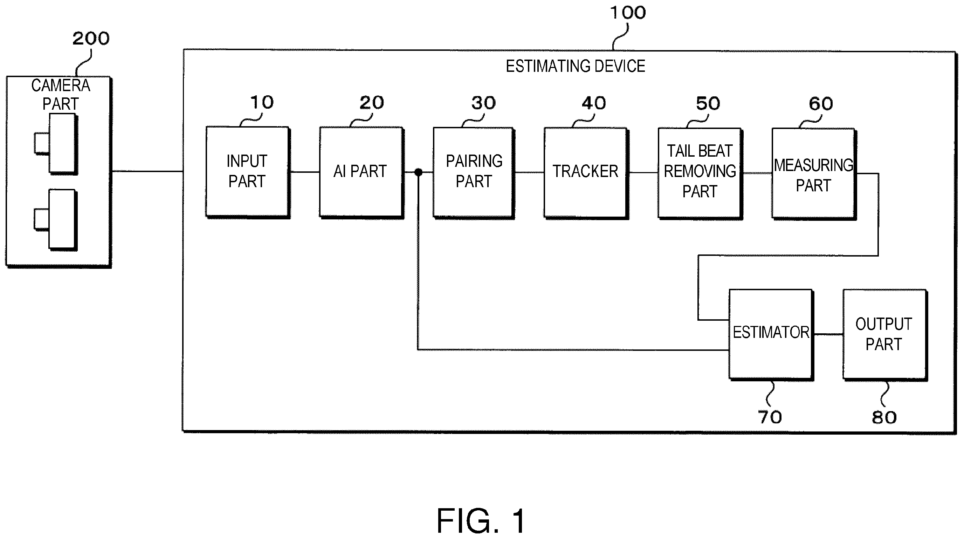

Hereinafter, one embodiment of the present disclosure is described. Fig. 1 is a block diagram illustrating one example of a configuration of an estimating device 100 of this embodiment. The estimating device 100 includes an input part 10, an AI part 20, a pairing part 30, a tracker 40, a tail beat removing part 50, a measuring part 60, an estimator 70 as an estimator, and an output part 80.

A camera part 200 is a waterproofed stereoscopic camera, for example, installed at a given position underwater inside a fish preserve. The camera part 200 is capable of imaging an underwater life form, such as fish, which swims inside the fish preserve. Note that the camera part 200 may be a monocular camera. Alternatively, other imaging devices may be used instead of the camera. Below, fish is described as one example of the underwater life form. The camera part 200 outputs captured image data (video). The captured image data is comprised of a unit of images of a plurality of frames (frame image).

The estimating device 100 may be a personal computer etc., or may be a server on the Internet (cloud). If the estimating device 100 is the personal computer etc., the estimating device 100 may acquire the captured image data directly from the camera part 200. If the estimating device 100 is the server on the Internet, the estimating device 100 may acquire the captured image data, which is imaged by the camera part 200, via a client terminal apparatus (not illustrated) etc.

The input part 10 acquires the captured image data captured by the camera part 200. The input part 10 outputs the acquired captured image data to the AI part 20.

The AI part 20 is a model generated by machine learning, and outputs data necessary for estimating the size of fish based on the captured image data. The size of fish may be comprised of a fork length and a body depth, for example. Below, the AI part 20 is described concretely. The fork length is a body length, and concretely, it is a length from a tip end of an upper jaw (snout tip) of fish to a most dented part (fork) at the center which is forked in a caudal fin. The body depth is a vertical distance from a dorsal edge of fish to a ventral or abdominal edge, and, in detail, it is a distance from the root of a ventral fin to the dorsal edge.

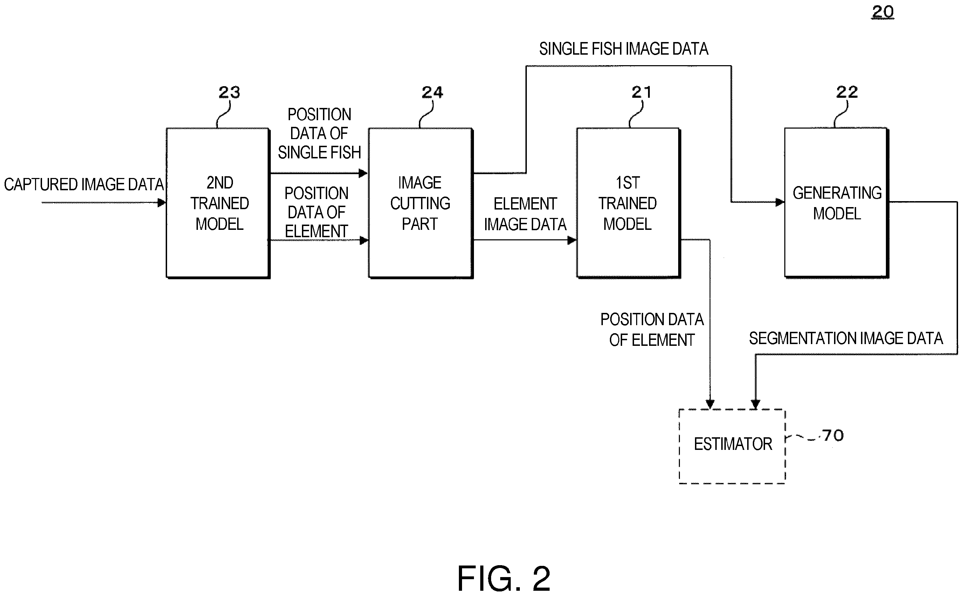

Fig. 2 is a schematic diagram illustrating one example of a configuration of the AI part 20. The AI part 20 includes a first trained model 21 as a second acquirer, a generating model 22 as a generator, a second trained model 23, and an image cutting part 24 as a first acquirer. The estimator 70 is capable of estimating the size of fish based on position data of an element outputted from the first trained model 21, and segmentation image data of fish outputted from the generating model 22. In this case, the camera part 200 may be the monocular camera.

The second trained model 23 is generated by performing machine learning so that, when the captured image data is inputted, the second trained model 23 outputs position data of a single fish (first position data of the underwater life form) and position data of the element (second position data of the given element of the underwater life form). The position data outputted from the second trained model 23 is coordinates (x, y) or an area (x, y, width, height) on the captured image.

The image cutting part 24 cuts or extracts an image of a peripheral area including the coordinates or the area based on the position data (the coordinates or the area) of the single fish outputted from the second trained model 23 to acquire single fish image data. The single fish image includes an image of the entire fish. The image cutting part 24 cuts the image of the peripheral area including the coordinates or the area based on the position data (the coordinates or the area) of the element outputted from the second trained model 23 to acquire element image data. The element image includes an image of the given element of the fish. The image cutting part 24 outputs the single fish image data to the generating model 22, and outputs the element image data to the first trained model 21. Note that the image cutting part 24 may be provided outside the AI part 20.

The first trained model 21 is generated by performing machine learning so that, when the element image data outputted from the image cutting part 24 is inputted, the first trained model 21 outputs position data of the element. The generating model 22 is generated by performing machine learning so that, when the single fish image data outputted from the image cutting part 24 is inputted, the generating model 22 outputs segmentation image data of the fish.

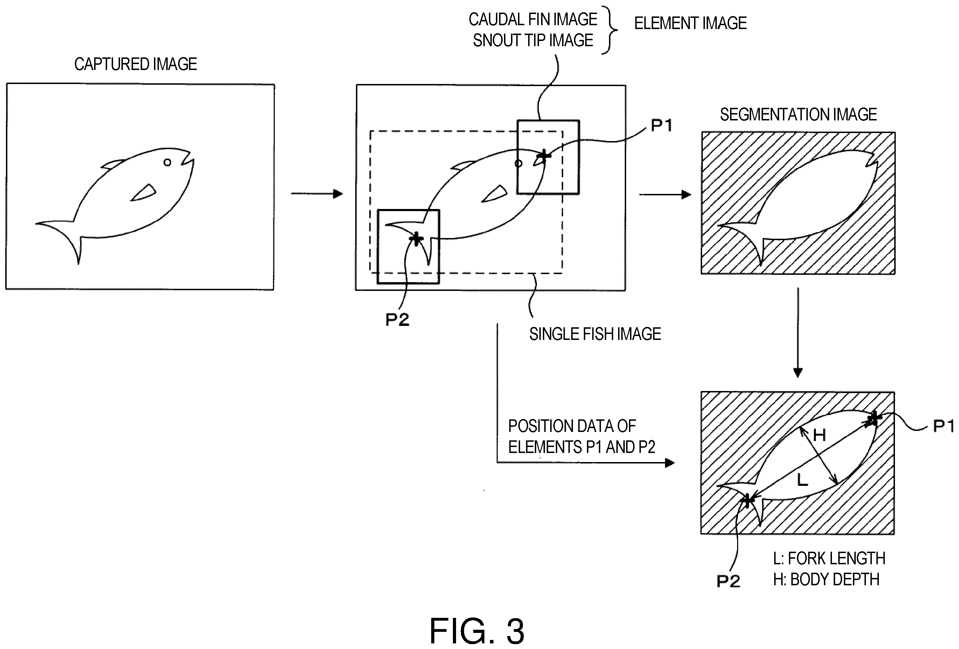

Fig. 3 is a schematic diagram illustrating a flow of estimation of the size of fish. In Fig. 3, it is assumed that one fish (single fish) is indicated in the captured image, for convenience. As described above, the second trained model 23 collaborates with the image cutting part 24 to output the single fish image data (image data of a first area including the first position data), and the element image data (image data of a second area including the second position data), when the captured image data is inputted. As illustrated in Fig. 3, the single fish image is an image of a rectangular area surrounding the entire single fish. The single fish image data is data including rectangular area data and a class inside the rectangular area (for example, fish). The element image is a snout tip image including a snout tip P1 as the given element, and a caudal fin image including a caudal fin (or may be a fork thereof) P2 as the given element. The element image data is data including rectangular area data and a class inside the rectangular area (for example, the snout tip and the caudal fin).

The first trained model 21 outputs the position data of the element, when the element image data is inputted. The position data of the element is position data of the snout tip P1 and position data of the caudal fin P2, and is comprised of coordinates in the image. If the coordinate system of the image is represented by XY, the position data can be indicated by coordinates (x, y) or an area (x, y, width, height). Note that, in this case, coordinates of the camera in the optical axis direction can be expressed by Z.

The generating model 22 outputs the segmentation image data, when the single fish image data is inputted. The segmentation image classifies the class of each pixel of the single fish image, and in the example of Fig. 3, the pixel which is classified as "a fish body excluding fins" is indicated "without a pattern," and the pixel which is classified as "an element other than the fish body" is indicated "with a pattern." From the segmentation image, a boundary between the fish body and the element other than the fish body (a contour of the fish body) can be obtained.

The estimator 70 is capable of estimating the size of fish based on the position data of the element and the segmentation image data. As illustrated in Fig. 3, a length of a straight line L which connects the snout tip P1 with the caudal fin P2 can be estimated as a fork length. Further, a length between intersections of a straight line H perpendicular to the straight line L and the contour of the fish body can be estimated as a body depth. Here, the position of the intersection of the straight line H and the straight line L may be at a point of a given ratio on the straight line L from the position of the snout tip P1 (for example, 40% of the fork length).

As described above, by combining the position data of the given element (the snout tip and the caudal fin) and the segmentation image, the body depth can be measured based on the body depth straight line H perpendicular to the straight line which indicates the fork length, and the segmentation image. Therefore, the size of the fish can be stably estimated with high precision, even when there is no optimal characteristic part for body depth measurement.

Note that, by performing processing after the pairing part 30 (described below), the body depth can be measured with higher precision.

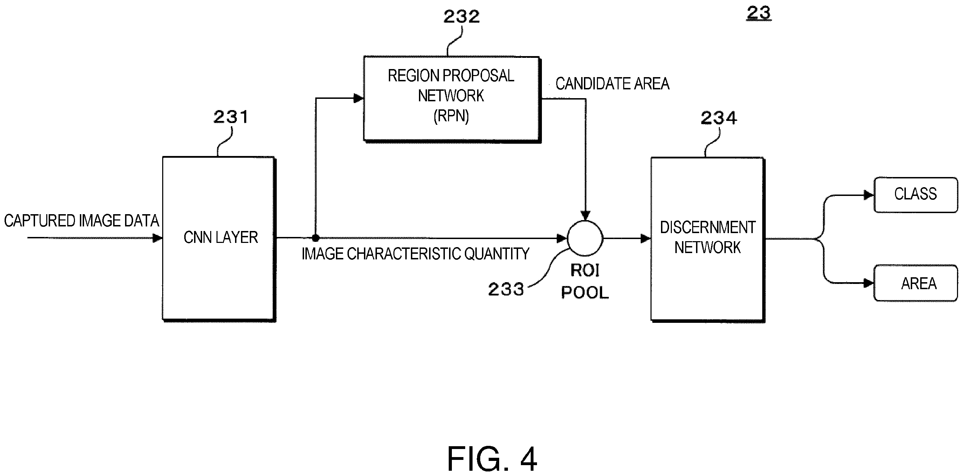

Fig. 4 is a schematic diagram illustrating one example of a configuration of the second trained model 23. The second trained model 23 may be comprised of a Faster R-CNN (Convolutional Neural Network), for example. The second trained model 23 includes a CNN layer 231, a region proposal network (RPN) 232, a ROI (Region-of-Interest) POOL 233, and a discernment network 234. The CNN layer 231 generates an image characteristic quantity (characteristic map) based on the inputted captured image data, and outputs it to the region proposal network (RPN) 232 and the ROI POOL 233.

The region proposal network (RPN) 232 calculates a candidate area based on the inputted image characteristic quantity, and outputs it to the ROI POOL 233. The region proposal network (RPN) 232 is capable of detecting where an object is indicated in the captured image (i.e., an area where the object is indicated, and the shape of the rectangle).

The ROI POOL 233 connects the image characteristic quantity outputted from the CNN layer 231 with the candidate area outputted from the region proposal network (RPN) 232, and outputs a fixed-length ROI area characteristic to the discernment network 234.

The discernment network 234 recalculates an accurate area and an accurate class based on the inputted ROI area characteristic, classifies the area and the class of this area, and outputs the area and the class. Here, the class includes a single fish, a snout tip, and a caudal fin. The second trained model 23 is not limited to the Faster R-CNN, but it may be an R-CNN, a Mask R-CNN, a YOLO (You Only Look Once), an SSD (Single Shot Multibox Detector), etc.

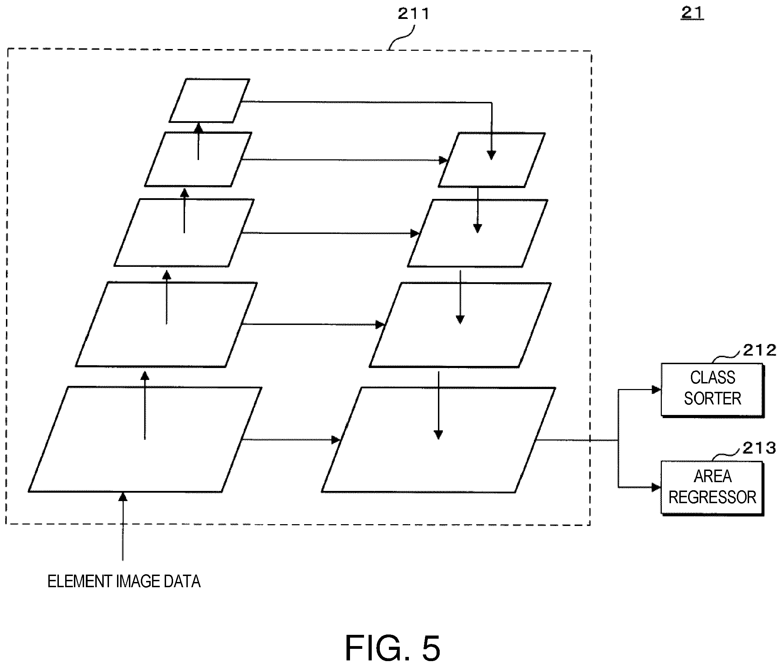

Fig. 5 is a schematic diagram illustrating one example of a configuration of the first trained model 21. The first trained model 21 may be comprised of a RetinaNet, for example. The first trained model 21 includes a Feature Pyramid Network 211, a class sorter 212, and an area regressor 213. The element image data outputted from the second trained model 23 is inputted into the first trained model 21. The element image data includes the image data of the caudal fin, and the image data of the snout tip. The Feature Pyramid Network 211 calculates a characteristic hierarchy which constitutes a characteristic map of various scales in the bottom-up direction, and carries out up-sampling of the characteristic map from upper layers which are coarse in a spatially sense but strong in a semantical sense in the top-down direction, to generate characteristics of high resolution. Each characteristic is connected to a characteristic calculated in the bottom-up direction.

Thus, the Feature Pyramid Network 211 can extract the characteristic quantity with both the high-order and low-order features, and can realize the accuracy which is balanced in both the semantical sense and the positional sense.

The area regressor 213 outputs the position of the snout tip and the position of the caudal fin. The positions of the snout tip and the caudal fin are indicated by coordinate values in the image. The class sorter 212 identifies the class (the snout tip and the caudal fin) at the position (coordinate value) outputted from the area regressor 213. By the first trained model 21, the position of the snout tip in the image of the snout tip can be obtained with sufficient accuracy, and the position of the caudal fin in the image of the caudal fin can be obtained with sufficient accuracy. The first trained model 21 is not limited to the RetinaNet, but may be a SegNet, a Mask R-CNN, an SVM (Support Vector Machine), etc.

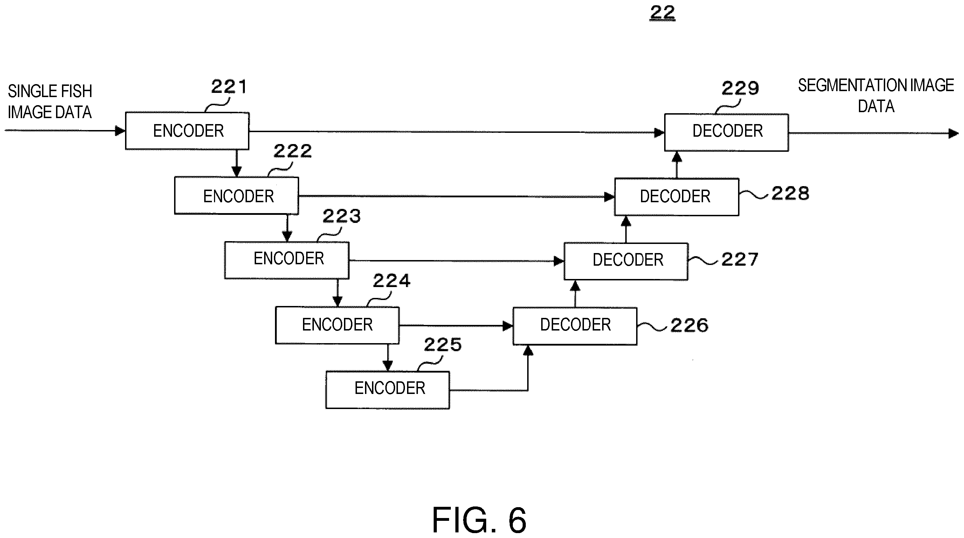

Fig. 6 is a schematic diagram illustrating one example of a configuration of the generating model 22. The generating model 22 may be comprised of a U-Net, for example. The generating model 22 includes encoders 221-225 and decoders 226-229. The generating model 22 repeats convolution processing at the encoders 221-225 for the inputted single fish image data. The decoders 226-229 repeat up-sampling (deconvolution) processing for the image convoluted by the encoder 225. When decoding the convoluted image, the characteristic map generated by the encoders 224-221 is added to the image to be deconvoluted. The generating model 22 outputs the segmentation image of the fish body in the inputted single fish image. From the segmentation image, the boundary between the fish body and the element other than the fish body (the contour of the fish body) can be obtained.

Thus, the position information to be lost by the convolution can be held, and the higher-precision segmentation (to which class each pixel belongs) can be outputted. The generating model 22 is not limited to the U-Net, but it may be a GAN (Generative Adversarial Network), SegNet, etc.

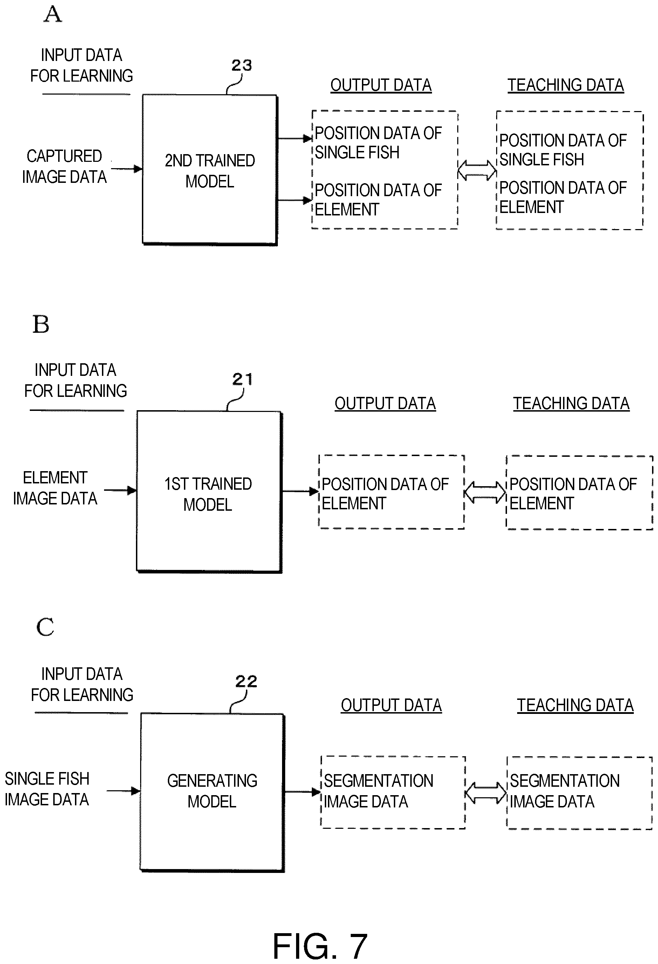

Figs. 7A to 7C are schematic diagrams illustrating examples of a method of generating each model by machine learning. Fig. 7A illustrates the generating method of the second trained model 23. The second trained model 23 can be generated by performing machine learning so that, when the captured image data is inputted as input data for learning, the position data of the single fish (first position data) and the position data of the element (second position data) are outputted. In this case, as teaching data, the position data of the single fish and the position data of the element which are created by performing annotation based on the captured image data which is the input data for learning, are used. A large number of learning data and teaching data are prepared to carry out the machine learning of the second trained model 23. Internal parameters of the second trained model 23 are updated so that the output data approaches the teaching data to generate the second trained model 23.

Fig. 7B illustrates the generating method of the first trained model 21. The first trained model 21 can be generated by performing machine learning so that, when the element image data is inputted as input data for learning, the position data of the element is outputted. In this case, as teaching data, the position data of the element created by performing annotation based on the element image data which is the input data for learning, is used. A large number of learning data and teaching data are prepared to carry out the machine learning of the first trained model 21. Internal parameters of the first trained model 21 are updated so that the output data approaches the teaching data to generate the first trained model 21.

Fig. 7C illustrates the generating method of the generating model 22. The generating model 22 can be generated by performing machine learning so that, when the single fish image data is inputted as input data for learning, the segmentation image data is outputted. In this case, as teaching data, the segmentation image data created by performing annotation based on the single fish image data which is the input data for learning, is used. A large number of learning data and teaching data are prepared to carry out the machine learning of the generating model 22. Internal parameters of the generating model 22 are updated so that the output data approaches the teaching data to generate the generating model 22.

Each model described above can be retrained. For example, based on the position data outputted from the first trained model 21 as illustrated in Fig. 3, estimated positions of the caudal fin and the snout tip are displayed on a screen, and operation for correcting the displayed estimated positions of the caudal fin and snout tip is accepted. The correction of the estimated position is to move the estimated position to a correct position on the screen, for example, by operating a mouse etc. to move a pointer on the screen to the estimated position and performing a given operation (touch, click, drag and drop, etc.). The accepted corrected position and image data when accepting the corrected position are prepared as training data, and the first trained model 21 can be retrained based on the accepted corrected position and the image data when accepting the corrected position. Therefore, the accuracy of the position data outputted from the first trained model 21 improves.

Further, the segmentation image generated by the generating model 22 as illustrated in Fig. 3 is displayed on the screen, and operation for correcting the displayed segmentation image is accepted. The correction of the segmentation image is carried out, for example, by starting up an application, such as painting software, displaying the segmentation image on the screen, operating a mouse etc. to move a pointer on the screen to a necessary position, and performing a given operation (touch, click, drag and drop, etc.), to convert a pixel of an element other than the fish body into a pixel of the fish body, or convert a pixel of the fish body into a pixel of an element other than the fish body. The corrected segmentation image and image data when accepting the correction are prepared as training data, and the generating model 22 can be retrained based on the corrected segmentation image and the image data when accepting the correction. Therefore, the accuracy of the segmentation image generated by the generating model 22 improves.

Further, the position data of the single fish, the position data of the snout tip, and the position data of the caudal fin which are outputted from the second trained model 23 are displayed on the screen, and operation for correcting the displayed position data is accepted. Note that, in this case, in terms of improving the workability and the legibility, cut-out images (the single fish image, the snout tip image, and the caudal fin image) which respectively include the position of the single fish, the position of the snout tip, and the position of the caudal fin, may be displayed on the screen together with the positions. When correcting the position data of the single fish, the position of the single fish outputted from the second trained model 23 is displayed on the screen, and operation for correcting the displayed position of the single fish is accepted. The correction of the position of the single fish may be performed, for example, by operating a mouse etc., to move the position of the single fish on the screen and correct the position. When correcting the position of the snout tip, the position of the snout tip outputted from the second trained model 23 is displayed on the screen, and operation for correcting the displayed position of the snout tip is accepted. The correction of the position of the snout tip may be performed, for example, by operating a mouse etc. to move the position of the snout tip on the screen and correct the position. When correcting the position of the caudal fin, the position of the caudal fin outputted from the second trained model 23 is displayed on the screen, and operation for correcting the displayed position of the caudal fin is accepted. The correction of the position of the caudal fin may be performed, for example, by operating a mouse etc. to move the position of the caudal fin on the screen and correct the position. Further, as the position data of the snout tip and the caudal fin, the position data corrected for retraining the first trained model 21 may also be used.

The corrected position of the single fish and image data when accepting the correction are prepared as training data, and the second trained model 23 can be retrained based on the corrected position of the single fish and the image data when accepting the correction. The corrected position of the snout tip and image data when accepting the correction are prepared as training data, and the second trained model 23 can be retrained based on the corrected position of the snout tip and the image data when accepting the correction. Similarly, the corrected position of the caudal fin and image data when accepting the correction are prepared as training data, and the second trained model 23 can be retrained based on the corrected position of the caudal fin and the image data when accepting the correction. Therefore, the accuracy of the position data of the single fish and the position data of the element which are outputted from the second trained model 23 improves.

Next, a method of further improving the accuracy of the body depth measurement is described. Below, pairing, tracking, tail beat removal, and the body depth measurement will be described in order. Note that the camera part 200 is the stereoscopic camera.

The pairing part 30 performs pairing between the cameras, and pairing between the fish and the element. First, the pairing between the cameras is described. The pairing between the cameras includes fish frame pairing and element frame pairing.

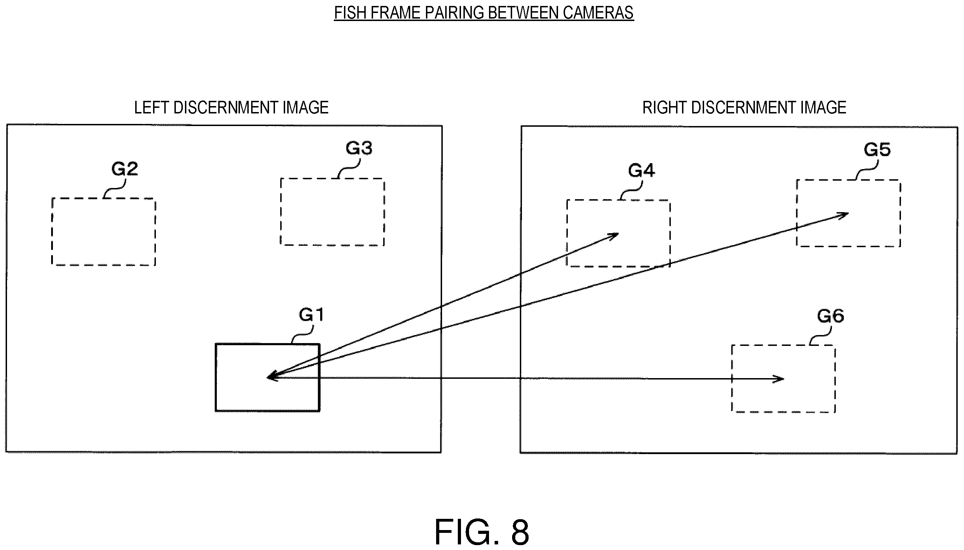

Fig. 8 is a schematic diagram illustrating one example of the fish frame pairing between the cameras. In Fig. 8, a left discernment image is an image where a single fish image estimated based on an image captured by a left camera of the stereoscopic camera is indicated, and a right discernment image is an image where a single fish image (also referred to as a "fish frame") estimated based on an image captured by a right camera of the stereoscopic camera is indicated. Although in the example of Fig. 8 three pairs of fish frames are illustrated, the number of fish frames is not limited to three in an actual case. Instead of disposing the stereoscopic camera in the left-and-right direction (horizontally), it may be disposed in the up-and-down direction, or it may be disposed in an oblique direction (for example, at an angle larger than 0° and smaller than 90° with respect to the horizontal direction).

The pairing part 30 tries the pairing for all the combinations of all the fish frames in the left and right discernment images. In the example of Fig. 8, the pairing is performed between a fish frame G1 in the left discernment image and all of the fish frames G4, G5, and G6 in the right discernment image. In the pairing, the nearest partner within a tolerable error range is selected. In the example of Fig. 8, the fish frame G6 is selected as the nearest partner for the fish frame G1. Similarly, also for the fish frames G2 and G3 in the left discernment image, corresponding partners are selected from the fish frames in the right discernment image.

Although not illustrated, the element frame pairing can be performed similarly to the fish frame pairing. The pairing part 30 tries the pairing for all the combinations of all the element frames in the left and right discernment images. The pairing is performed between the element frame in the left discernment image and all of the element frames in the right discernment image. In the pairing, the nearest partner within a tolerable error range is selected.

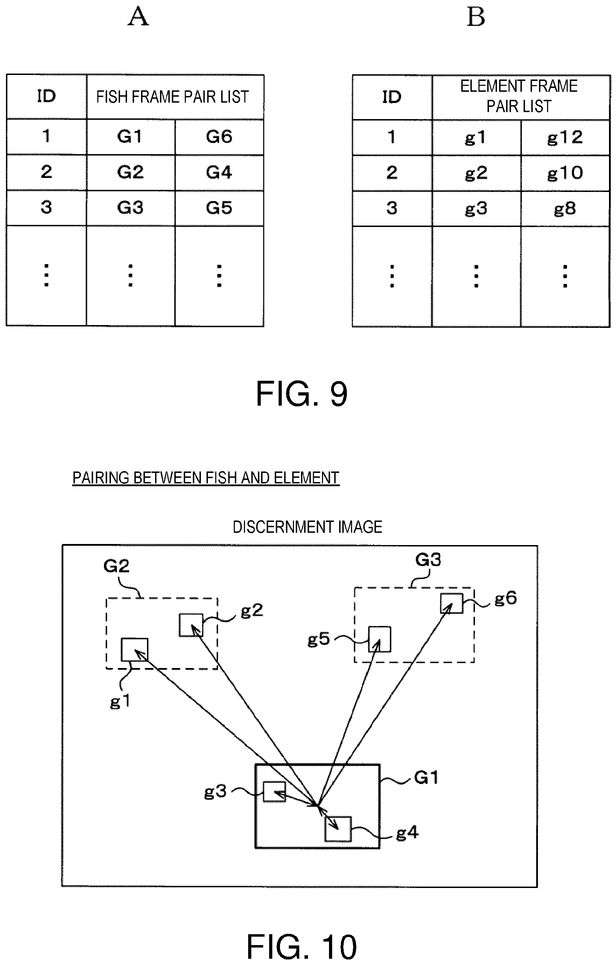

Figs. 9A and 9B are views illustrating one example of pair lists of the fish frame and the element frame. Fig. 9A illustrates the fish frame pair list, and Fig. 9B illustrates the element frame pair list. As illustrated in Fig. 9A, the fish frame G1 in the left discernment image and the fish frame G6 in the right discernment image are a pair. Similarly, the fish frame G2 in the left discernment image and the fish frame G4 in the right discernment image are a pair, and the fish frame G3 in the left discernment image and the fish frame G5 in the right discernment image are a pair.

As illustrated in Fig. 9B, an element frame g1 in the left discernment image and an element frame g 12 in the right discernment image are a pair, an element frame g2 in the left discernment image and an element frame g10 in the right discernment image are a pair, and an element frame g3 in the left discernment image and an element frame g8 in the right discernment image are a pair. Other elements are similarly paired.

Fig. 10 is a schematic diagram illustrating one example of the pairing between the fish and the element. It is assumed that the paring was performed for the fish frames G1-G3 and the element frames g1-g6 by the above-described pairing between the cameras. Note that the fish frames G1-G3 and the element frames g1-g6 have the fish frame and the element frame to be paired with, respectively. Fig. 10 illustrates one of the fish frame and the element frame which are paired (for example, the left discernment image).

The pairing part 30 tries pairing for all the combinations of all the fish frames and the element frames in the discernment image. In this case, the pairing can be performed using only the left discernment image, only the right discernment image, or both the left and right discernment images. In the example of Fig. 10, the pairing is performed between the fish frame G1 and all of the element frames g1-g6 in the discernment image. In the pairing, the nearest partner within a tolerable error range is selected. Similar processing is performed for other fish frames G2 and G3.

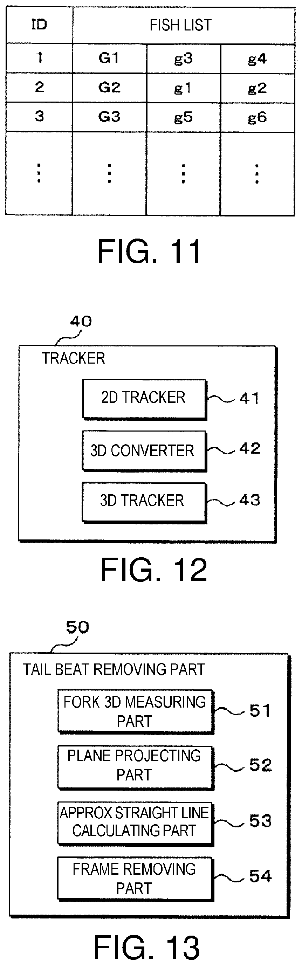

Fig. 11 is a view illustrating one example of fish list. As illustrated in Fig. 11, the fish frame G1 is paired up with the element frames g3 and g4. Similarly, the fish frame G2 is paired up with the element frames g1 and g2, and the fish frame G3 is paired up with the element frames g5 and g6. That is, as for the fish with ID of 1, the fish frame G1 is paired up with the element frames g3 and g4, as for the fish with ID of 2, the fish frame G2 is paired up with the element frames g1 and g2, and as for the fish with ID of 3, the fish frame G3 is paired up with the element frames g5 and g6.

According to the above-described configuration, the fish frame and the element frame can be associated with each other for each of a plurality of fish, for example, which are obtained by imaging the inside the fish preserve.

Fig. 12 is a block diagram illustrating one example of a configuration of the tracker 40. The tracker 40 performs tracking between the frames of fish which is swimming inside the fish preserve. By the tracking, a double count of fish can be prevented. The tracker 40 includes a 2D tracker 41, a 3D converter 42, and a 3D tracker 43.

The 2D tracker 41 performs tracking of each fish using the fish frame pair list, the element frame pair list, and the fish list which are generated by the pairing part 30. The 2D tracker 41 performs tracking based on a 2D image of fish.

The 3D converter 42 converts the 2D image of fish into a 3D image by using the single fish image obtained by imaging of the left camera, the single fish image obtained by imaging of the right camera, and the ranging principle of the stereoscopic camera, based on the fish frame pair list, the element frame pair list, and the fish list, which are generated by the pairing part 30. Alternatively, 3D positions of the snout tip and the fork may be measured based on the principle of triangulation. A distance Z to fish for each pixel of the 2D image can be calculated by Z=(B×F)/D. Here, B is a distance between the cameras, F is a focal length, and D is a parallax.

The 3D tracker 43 performs tracking of each fish using the fish frame pair list, the element frame pair list, and the fish list which are generated by the pairing part 30. The 3D tracker 43 is capable of performing the tracking based on the position of the snout tip in the 3D image of fish. Therefore, the influence of a tail beat of fish when the fish swims underwater can be reduced.

Fig. 13 is a block diagram illustrating one example of a configuration of the tail beat removing part 50. The tail beat removing part 50 includes a fork 3D measuring part 51, a plane projecting part 52, an approximation straight line calculating part 53, and a frame removing part 54.

Based on the coordinates (X, Y) in the image of the fork (caudal fin) which has been paired by the pairing part 30, the fork 3D measuring part 51 measures a 3D position (X, Y, Z). Here, the lateral direction of the image is set as the X-axis, the vertical direction is set as the Y-axis, and the optical axis direction of the camera is set as the Z-axis.

The plane projecting part 52 projects the 3D position of the fork on the XZ plane. Therefore, the position of the fork can be converted into the position seen from the back side of the fish. The plane projecting part 52 records the position of the fork seen from the back side of the fish for every frame. Therefore, the position of the fork can be plotted on the XZ plane.

The approximation straight line calculating part 53 calculates an approximation straight line of the position of the fork plotted on the XZ plane (fork track).

The frame removing part 54 removes a frame corresponding to the fork, when a deviation of the fork from the approximation straight line exceeds a tolerable range. Instead of the configuration in which the approximation straight line is calculated after the 3D position of the fork is projected on the plane, an approximation line in the 3D space may be calculated based on the 3D position of the fork. In this case, if the deviation of the 3D position of the fork from the calculated 3D approximation line exceeds the tolerable range, the frame corresponding to the fork may be removed.

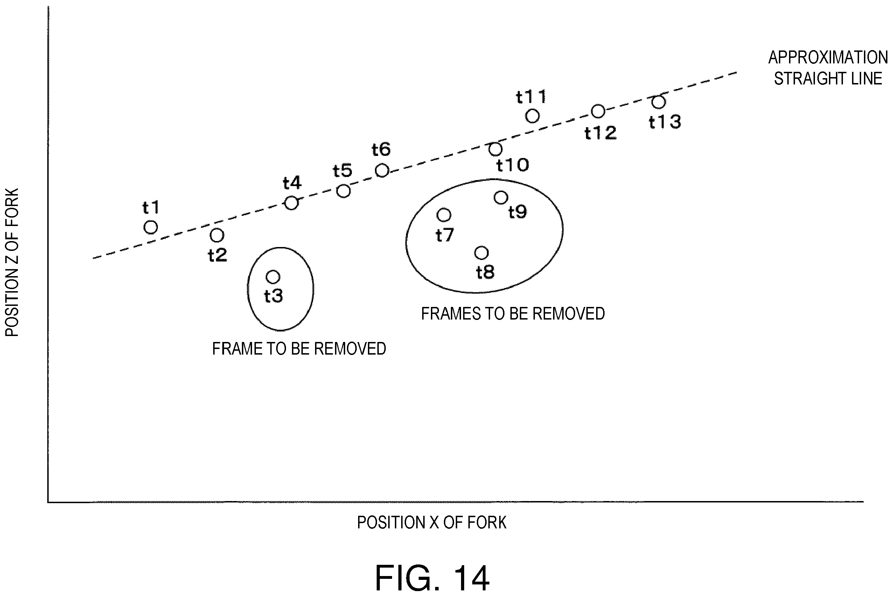

Fig. 14 is a schematic diagram illustrating one example of the approximation straight line of the fork track. In Fig. 14, the horizontal axis indicates the position X of the fork and the vertical axis indicates the position Z of the fork. In Fig. 14, O is the measured position of the fork, numerals t1-t13 indicate timings of the frames, and a broken-line straight line indicates the approximation straight line of the fork track. The position of the fork changes from Time t1 to Time t13. In Fig. 14, the positions of the fork at Times t3 and t7 to t9 are deviated from the approximation straight line. Therefore, the frames at Times t3 and t7-t9 are removed, and the body depth measurement (described below) is performed using each frame of the remaining Times t1-t2, t4-t6, and t10-t13. The reason why the position of the fork is deviated from the approximation straight line is that the fork moves greatly, for example, when the fish changes the course. Since this becomes a factor of the error when estimating the size of fish, the frame corresponding to the fork is removed when the deviation of the fork from the approximation straight line exceeds a tolerable range. Note that the frame removal is not limited to the method using the approximation straight line, but other machine learning, such as an SVM, a neural network, and clustering, may also be used. Alternatively, the frame may be removed, when the temporal variation of the position of the fork exceeds a given threshold.

The tail beat removing part 50 outputs to the measuring part 60 frames other than the frames which are removed as the tail beat from the captured frames, as tail-beat removed frames (measurement target frames).

That is, the estimating device 100 inputs the image data of each of the plurality of frames imaged by the stereoscopic camera into the first trained model 21, calculates the three-dimensional position of the fork for every frame based on the acquired position data of the given element, projects the calculated three-dimensional position on the given two-dimensional plane and identifies displacement of the fork for every frame, and selects the frame for estimating the size of the fish based on the identified displacement.

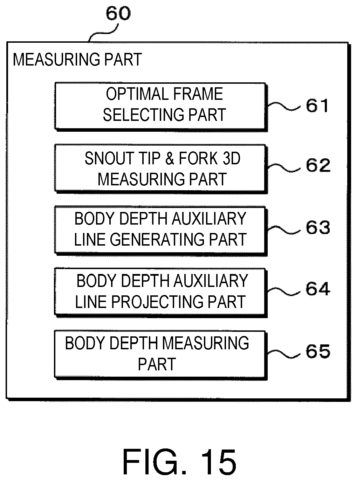

Fig. 15 is a block diagram illustrating one example of a configuration of the measuring part 60. The measuring part 60 includes an optimal frame selecting part 61, a snout tip & fork 3D measuring part 62, a body depth auxiliary line generating part 63, a body depth auxiliary line projecting part 64, and a body depth measuring part 65.

The optimal frame selecting part 61 selects a frame at the timing corresponding to the fork which is located at a position nearest to the approximation straight line of the fork track. Note that, instead of the configuration for selecting the optimal frame, a frame may be selected at random from the remaining frames after the frame removal, or a frame which is located several frames forward or rearward of the removed frame may be selected.

The snout tip & fork 3D measuring part 62 measures, in the selected frame, a 3D position of the snout tip, and a 3D position of the fork. Note that the 3D measurement may use a 3D position of the snout tip which is tracked by the 3D tracker 43, and a 3D position of the fork measured by the fork 3D measuring part 51.

The body depth auxiliary line generating part 63 generates nine body depth auxiliary lines which are perpendicular to a 3D straight line connecting the 3D position of the snout tip and the 3D position of the fork which are three-dimensionally measured so that the 3D straight line is divided into ten, for example.

The body depth auxiliary line projecting part 64 projects the body depth auxiliary line generated by the body depth auxiliary line generating part 63 on a 2D plane (for example, an XY plane).

The body depth measuring part 65 measures the body depth based on intersecting positions between the body depth auxiliary lines projected on the 2D plane and the contour of the fish body (for example, the contour on the segmentation image). Note that, if the body depth cannot be measured because of a deficit in the contour etc. of the fish body, the optimal frame selecting part 61 can select the frame at the timing corresponding to the fork located at the position which is the second closest to the approximation straight line of the fork track, and repeat each processing of the snout tip & fork 3D measuring part 62, the body depth auxiliary line generating part 63, the body depth auxiliary line projecting part 64, and the body depth measuring part 65. The deficit of the contour etc. of the fish body can be determined, for example, by comparing a distance between the intersections of the body depth auxiliary lines and the contour of the fish body with a given threshold. Alternatively, it can be determined by comparing a variation in the distance between the intersections of the body depth auxiliary lines and the contour of the fish body with the given threshold (note that the variation is calculated for each of adjacent body depth auxiliary lines). The deficit part may be interpolated.

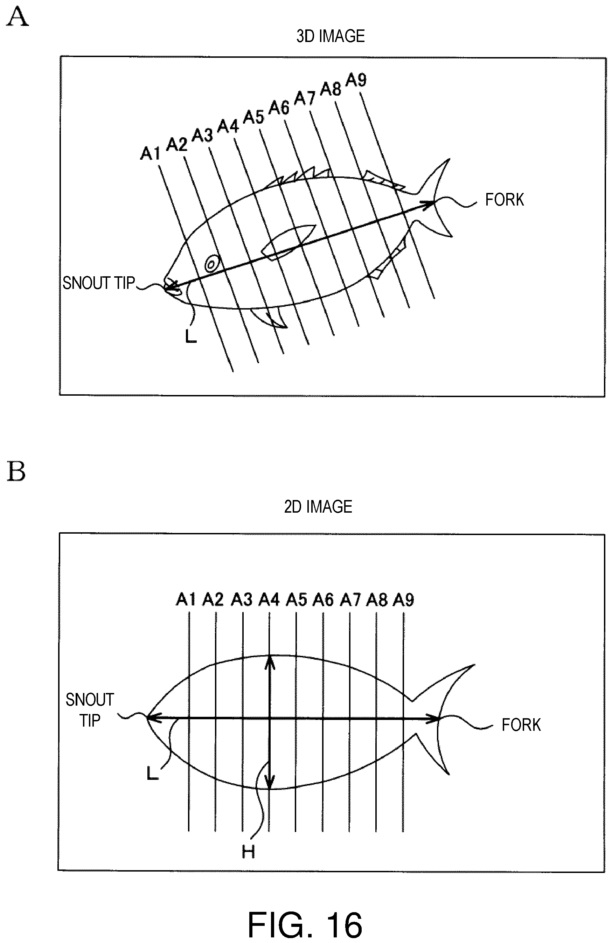

Figs. 16A and 16B are schematic diagrams illustrating one example of the body depth measurement. As illustrated in Fig. 16A, nine body depth auxiliary lines A1-A9 perpendicular to the 3D straight line L connecting the 3D position of the snout tip and the 3D position of the fork which are three-dimensionally measured are generated so that the 3D straight line L is divided into ten, for example.

As illustrated in Fig. 16B, the nine body depth auxiliary lines A1-A9 are projected on a 2D plane (for example, an XY plane), and the body depth is measured based on intersecting positions between the body depth auxiliary lines A1-A9 projected on the 2D plane and the contour of the fish body (for example, the contour on the segmentation image). In detail, a distance H between two positions where the body depth auxiliary line A4 at a distance equivalent to 40% of the fork length L from the snout tip intersects with the contour of the fish body can be measured as the body depth. Note that the number of the body depth auxiliary lines is one example, and it is not limited to nine. Further, the ratio 40% is one example, and the ratio is not limited to 40%.

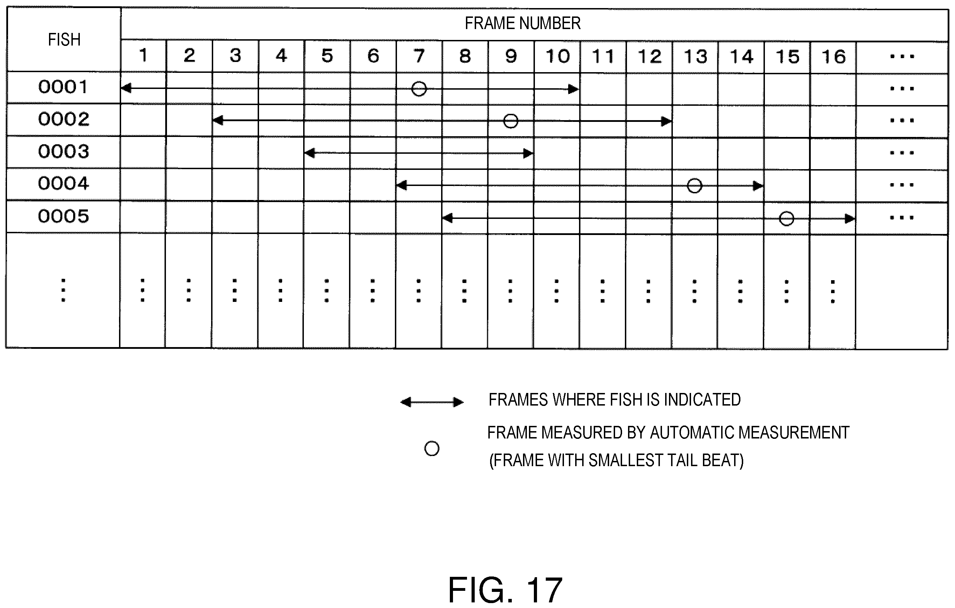

Fig. 17 is a schematic diagram illustrating one example of automatic measurement of the size of fish. In Fig. 17, an ID of fish indicated in an image of each frame number is illustrated. For example, in Frames 1-10, fish with a fish ID "0001" is indicated, and in Frame 7 indicated by "O," the size of the fish 0001 is automatically measured. Frame 7 measured by the automatic measurement is a frame, for example, with the smallest tail beat among Frames 1-10.

Similarly, in Frames 3-12, fish with a fish ID "0002" is indicated, and in Frame 9 indicated by "O," the size of the fish 0002 is automatically measured. In Frames 5-9, fish with a fish ID "0003" is indicated, but the size of the fish 0003 is not automatically measured. Further, in Frames 7-14, fish with a fish ID "0004" is indicated, and in Frame 13 indicated by "O," the size of the fish 0004 is automatically measured, and in Frames 8-16, fish with a fish ID "0005" is indicated, and in Frame 15 indicated by "O," the size of the fish 0005 is automatically measured. The recognition of the same individual (identical fish) between the frames is performed by the tracker 40.

The measuring part 60 outputs the measurement result to the estimator 70. The estimator 70 can collect the fork lengths and the body depths of the fish in the fish preserve which are automatically measured, and can estimate the size of the fish in the fish preserve.

The output part 80 can convert the estimation result of the estimator 70 into displayable data, and output it to an external terminal device, an external display device, etc.

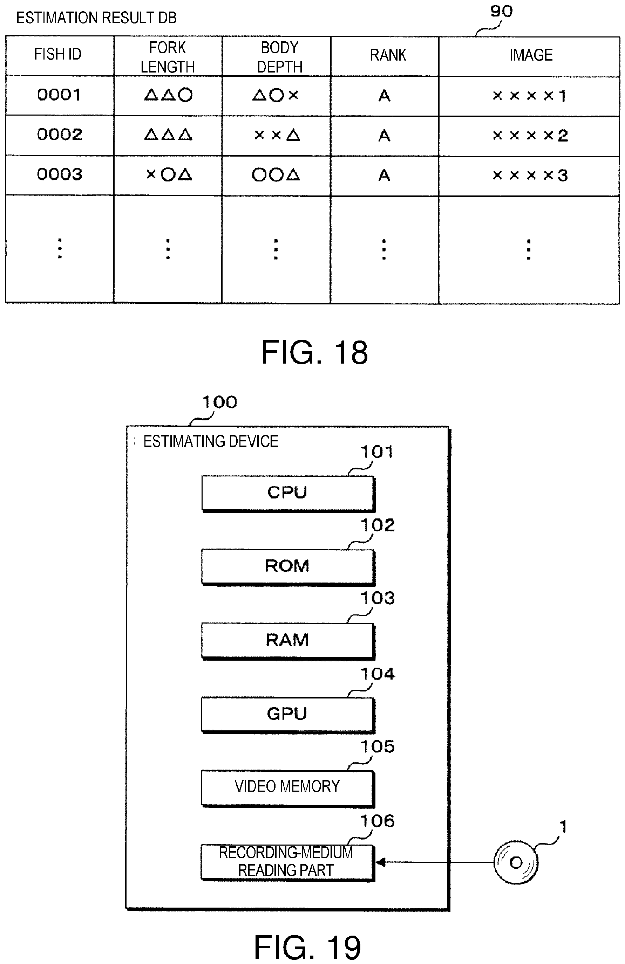

Fig. 18 is a schematic diagram illustrating one example of a configuration of an estimation result DB 90. The estimation result DB 90 may be provided inside the estimating device 100, or it may be provided to an external data server etc., as long as it is accessible from the estimating device 100. The estimation result DB 90 can store the estimation result of the estimating device 100. The estimation result DB 90 records, for example, the fish ID, the fork length, the body depth, a rank, and the image so that the fish ID is associated with the rest of the items. Although not illustrated, the position information (coordinate values) on the snout tip and the position information (coordinate values) on the caudal fin (fork) may also be recorded so as to be associated with the fish ID. The fish ID is an identifier for identifying fish in the fish preserve, for example. The rank identifies the measurement accuracy of the size of fish. The rank will be described in detail later. The image is an image of fish, where a straight line indicative of the fork length of the fish, and a straight line indicative of the body depth may be displayed so as to be superimposed on the image of the fish. Further, the frame number, a value of the fork length, a value of the body depth, and the rank to which the fish belongs may be displayed in the image of the fish.

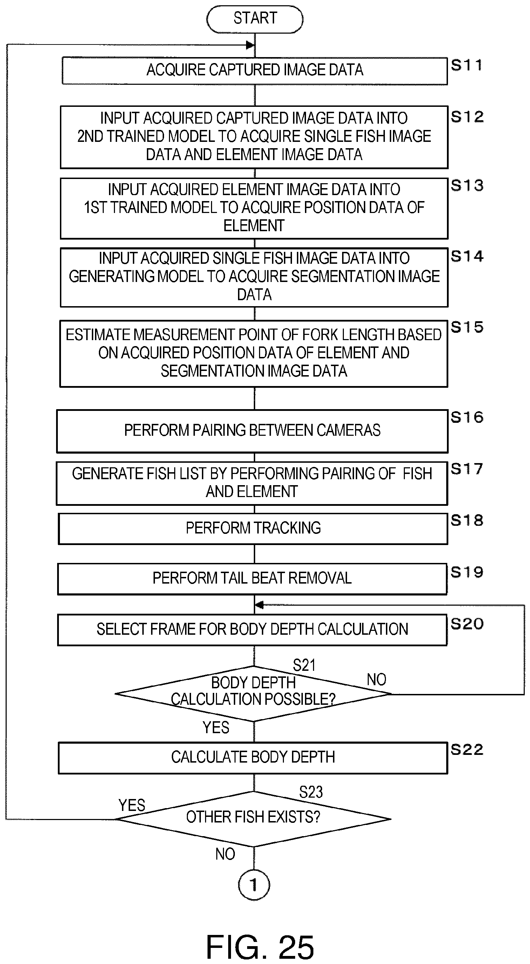

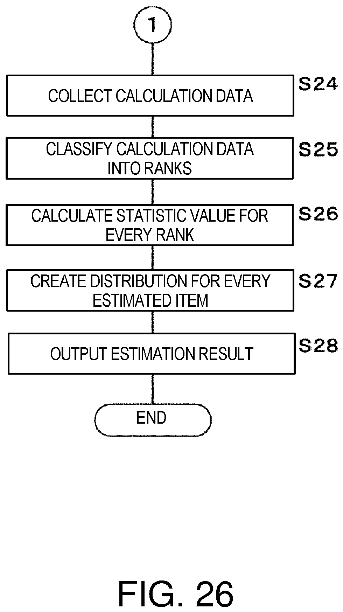

Fig. 19 is a block diagram illustrating another example of the configuration of the estimating device 100 of this embodiment. As illustrated in Fig. 19, as for the estimating device 100, a personal computer etc. may be used, for example. The estimating device 100 may be comprised of a CPU 101, a ROM 102, a RAM 103, a GPU 104, a video memory 105, and a recording-medium reading part 106. A computer program (computer program product) recorded on a recording medium 1 (for example, an optically readable disk recording medium, such as a CD-ROM) may be read by the recording-medium reading part 106 (for example, an optical disk drive), and can be stored in the RAM 103. Here, the computer program (computer program product) includes a procedure illustrated in Figs. 25 and 26 (described later). It may be stored in a hard disk drive (not illustrated) and may be stored in the RAM 103 when running the computer program.

By the CPU 101 executing the computer program (computer program product) stored in the RAM 103, each processing of the input part 10, the AI part 20, the pairing part 30, the tracker 40, the tail beat removing part 50, the measuring part 60, the estimator 70, and the output part 80 can be performed. The video memory 105 is capable of temporarily storing data for various image processing, the processing results, etc. Further, instead of being read by the recording-medium reading part 106, the computer program (computer program product) may be downloaded from other computers or network devices etc. via a network, such as the Internet.

Next, an estimation result displayed on a display screen of a terminal device connected with the estimating device 100 via a communication network is described. The following display processing can be performed by the estimating device 100 accessing the estimation result DB 90 according to a request from the terminal device, and if needed, calculating a numerical value to be displayed, and outputting it to the terminal device. Further, if the terminal device has already downloaded the data from the estimation result DB, the display processing can be carried out by a CPU of the terminal device displaying the downloaded data on a display unit.

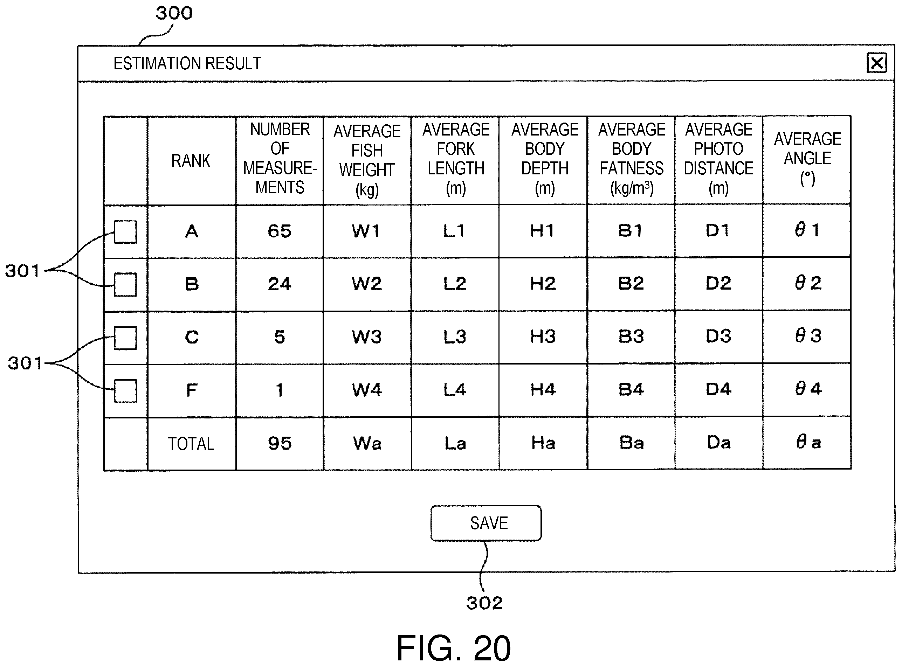

Fig. 20 is a schematic diagram illustrating a first indication example of the estimation result. In an estimation result screen 300, items including the rank, the number of measurements, an average fish weight, an average fork length, an average body depth, an average body fatness, an average photographing distance, and an average angle are displayed. Further, a checkbox 301 for accepting a selection of download of detailed data is displayed for every rank, and by operating a "SAVE" icon 302, the detailed data can be downloaded from the estimating device 100. The data to be download also includes the video imaged by the camera part 200.

The rank identifies the measurement accuracy of the size of fish, and for example, Rank A has an error in less than 5%, Rank B has an error in 5% or more and less than 10%, Rank C has an error in 10% or more and less than 20%, and Rank F has an error in 20% or more. Note that the number of classifications of the rank and the definition of the rank are not limited to those described above.

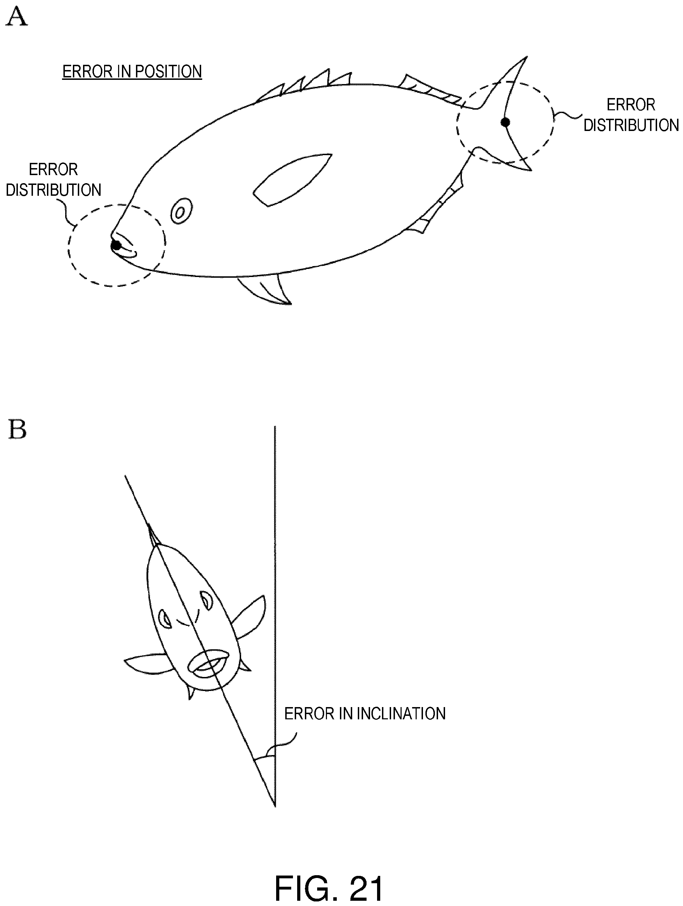

Figs. 21A and 21B are schematic diagrams illustrating examples of an error factor. Fig. 21A illustrates a distribution of the error in the position of the element. The errors of the fork length and the body depth increase as the error in the position of the snout tip and the error in the position of the fork (caudal fin) increase. The errors in the position of the snout tip and the fork are calculated based on a re-projection error when performing a three-dimensional measurement using the position data of the snout tip and the caudal fin (fork) which are outputted from the first trained model 21. Fig. 21B illustrates an error in an inclination (angle) of a fish body. The error in the body depth increases as the inclination of the fish body increases. The error in the inclination may be reflected on the body depth error by considering an angular deviation as a simple positional measurement deviation. As for the ranking, a worse one among the error in the position of the element and the error in the inclination may be adopted.

The number of measurements indicates the number of fish included in each rank. The average fork length and the average body depth indicate average values in each rank. The average fish weight and the average body fatness can be calculated based on the average fork length and the average body depth by using a given formula. In the aquaculture industry, grasping the weight of fish being bred is also important. Actually measuring the weight of the fish being bred using a weighting scale requires lots of labor. However, according to this embodiment, the weight of the fish being bred can be calculated based on the fork length and the body depth which are estimated by the estimating device 100, without using the actual weighting scale. In this case, since the body depth can be stably estimated with high precision, even when there is no optimal characteristic part for the body depth measurement, the weight of the fish being bred can also be estimated with sufficient accuracy.

As described above, the estimating device 100 classifies the accuracy of the estimated sizes of a plurality of fish (underwater life forms) cultivated in the fish preserve into a plurality of ranks, and displays the fish for each of the classified ranks. Therefore, since the sizes of fish in the fish preserve are obtained, and the reliability of the data is also obtained, information for determining the amount of feeding and the fish landing schedule can be provided.

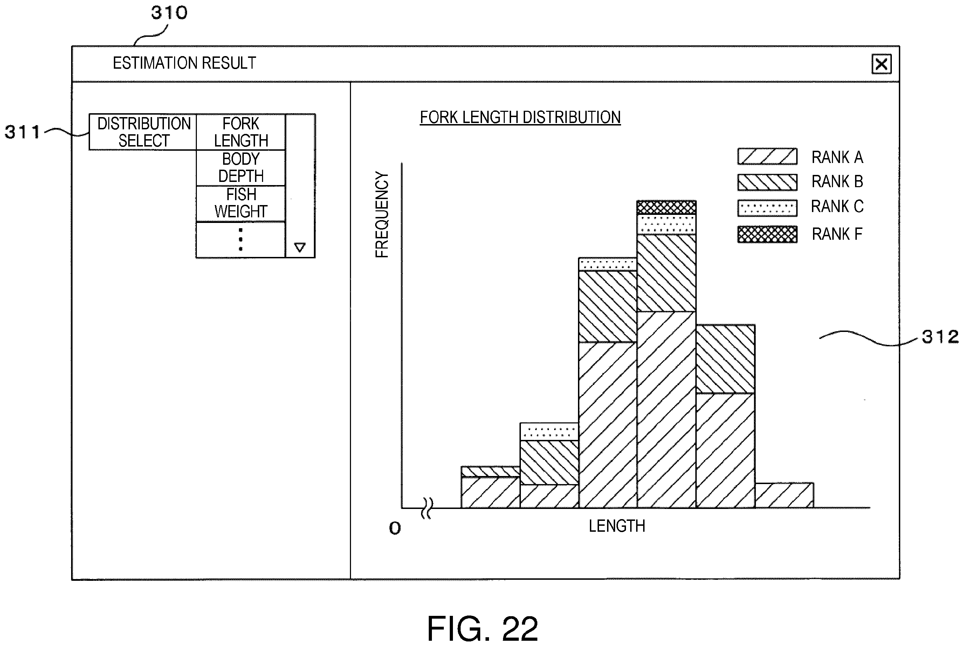

Fig. 22 is a schematic diagram illustrating a second indication example of the estimation result. In an estimation result screen 310, a distribution select list 311 and a distribution display area 312 are displayed. In the example of Fig. 22, a distribution of the fork length is selected from the items, such as the fork length, the body depth, and the fish weight, and the fork length distribution of the fish in the fish preserve is displayed in the distribution display area 312. Further, the ranks may also be displayed as an item of the distribution of the fork length. Distributions of the body depth and the fish weight may also be displayed similarly to the fork length.

As described above, the estimating device 100 can display a distribution of at least one of the fork length and the body depth of the plurality of fish cultivated in the fish preserve. Thus, since the distribution of the size of fish in the fish preserve is obtained, the information for determining the amount of feeding and the fish landing schedule can be provided.

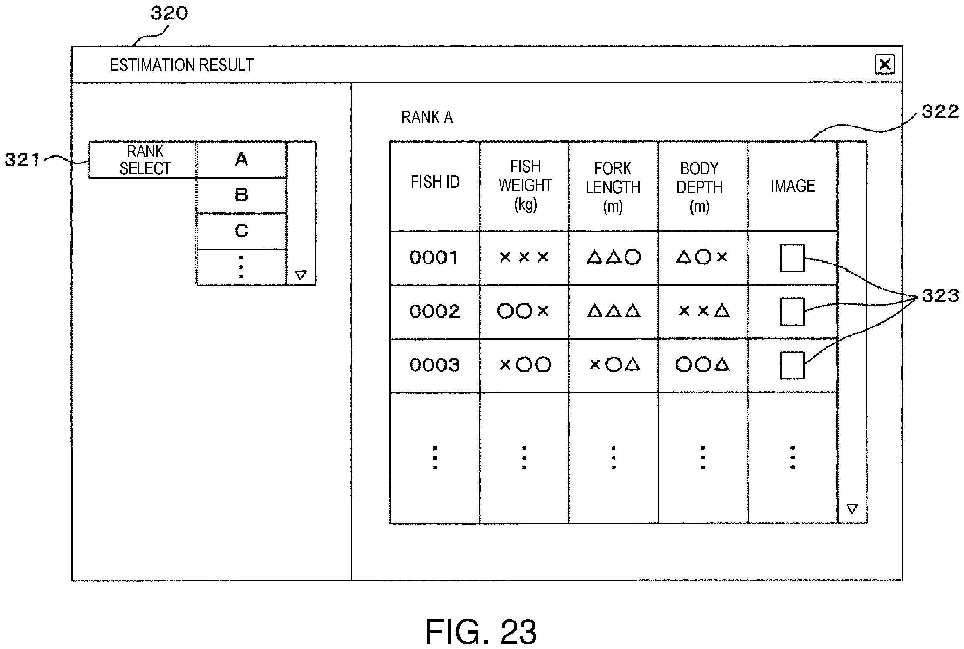

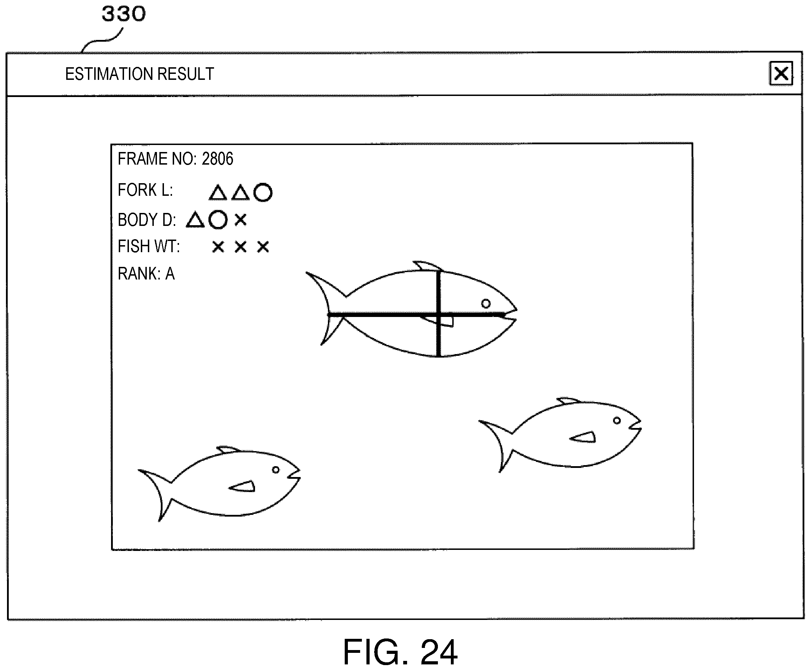

Fig. 23 is a schematic diagram illustrating a third indication example of the estimation result. In an estimation result screen 320, a rank select list 321 and a fish measurement data display area 322 are displayed. In the example of Fig. 23, Rank A is selected from Ranks A, B, C, and F. In the fish measurement data display area 322, the measurement data of each fish belonging to Rank A is displayed. Although in the example of Fig. 23 the measurement data includes the fish weight, the fork length, the body depth, and the image, it is not limited to these items. By operating a checkbox 323 in the section of the image, the image of the selected fish can be displayed as illustrated in Fig. 24 (described below).

Therefore, the measurement data of each fish (individual) belonging to the rank can be checked for every rank.

Fig. 24 is a schematic diagram illustrating a fourth indication example of the estimation result. In an estimation result screen 330, the image of the selected fish is displayed. Further, the straight line indicative of the fork length of fish, and the straight line indicative of the body depth may be displayed so as to be superimposed on the image of fish. Further, the frame number, the value of the fork length, the value of the body depth, the value of the fish weight, and the rank to which the fish belongs may also be displayed in the image of fish.

As described above, the estimating device 100 can display the fork length and the body depth in the image of fish. Therefore, the measurement data of each fish (individual) belonging to the rank can be confirmed.

Figs. 25 and 26 illustrate a flowchart of one example of the procedure of the estimating device 100. The estimating device 100 acquires the captured image data (S11), inputs the acquired captured image data into the second trained model 23 to acquire the single fish image data and the element image data from the image cutting part 24 (S12). Here, the element image data includes the snout tip image data and the caudal fin image data. The estimating device 100 inputs the acquired element image data into the first trained model 21 to acquire the position data of the element (S13). Here, the snout tip image data is inputted into the first trained model 21 to acquire the position information (values of the coordinates or the area) on the snout tip outputted from the first trained model 21, and the caudal fin image data is inputted into the first trained model 21 to acquire the position information (values of the coordinates or the area) on the caudal fin outputted from the first trained model 21.

The estimating device 100 inputs the acquired single fish image data into the generating model 22 to acquire the segmentation image data (S14), and estimates (generates) the measurement point of the fork length based on the acquired position data of the element and segmentation image data (S15). Here, the measurement point of the fork length (the position information on each of the snout tip and the caudal fin (the values of the coordinates or the area)) is stored in the estimation result DB 90. Note that the distance Z of fish or the given element of the fish from the camera may be calculated using processing at Steps S16 and S17 (described below), and the size of fish (the fork length and the body depth) may be estimated.

The estimating device 100 performs the pairing between the cameras (S16), and generates the fish list by performing the pairing of the fish and the element (S17). The estimating device 100 performs the tracking of fish (S18), and performs the tail beat removal (S19). The estimating device 100 selects the optimal frame for the body depth calculation (S20).

The estimating device 100 determines whether the body depth calculation is possible (S21), and if the body depth calculation is impossible (NO at S21), it performs processing at Step S20. If the body depth calculation is possible (YES at S21), the estimating device 100 calculates the body depth (S22). The calculation of the body depth is performed by the method illustrated in Fig. 16B. Although the "calculation" of the body depth is synonymous with the "measurement," it also has the meaning of measuring the body depth indirectly. The estimating device 100 determines the existence of other fish (fish which have not been measured) (S23).

If there are other fish (YES at S23), the estimating device 100 repeats the processing at and after Step S11. If there are no other fish (NO at S23), the estimating device 100 collects the calculation data of fish (S24), and classifies the calculation data into the ranks according to the error (S25). The estimating device 100 calculates a statistic value (for example, an average value) of the calculation data for every rank (S26), creates a distribution for every estimated item (for example, the fork length, the body depth, etc.) (S27), outputs the estimation result (S28), and ends this processing.

The estimating device 100 may be comprised of a CPU, a GPU, a ROM, a RAM, and a recording-medium reading part. The computer program recorded on the recording medium may be read by the recording-medium reading part, and it may then be stored in the RAM. By the CPU and the GPU executing the computer program stored in the RAM, the processing performed by the estimating device 100 can be performed. Further, instead of being read by the recording-medium reading part, the computer program may be downloaded via the network, such as the Internet.

According to this embodiment, since the body depth measurement is performed by the combination of the segmentation image and the body depth straight line, the size of fish can be stably estimated with high precision, even when there is no optimal part for the body depth measurement.

Further, since the fish fans out and folds fins while swimming, the fins may cause a deterioration of the measurement accuracy. However, according to this embodiment, since the segmentation is performed for the fish body excluding the fins, the body depth can be measured with high precision, without being influenced by the fins.

Further, in order to extract the characteristic point from a high-resolution image with high precision, the calculation load for this image processing increases. However, according to this embodiment, since the first trained model and the generating model are combined, the size of fish can be estimated with high precision by combining the segmentation image and the body depth straight line, and the load can be reduced.

### DESCRIPTION OF REFERENCE CHARACTERS

100 Estimating Device
10 Input Part
20 AI Part
21 First Trained Model
211 Feature Pyramid Network
212 Class Sorter
213 Area Regressor
22 Generating Model
221, 222, 223, 224, 225 Encoder
226, 227, 228, 229 Decoder
23 Second Trained Model
24 Image Cutting Part
231 CNN Layer
232 Region Proposal Network
233 ROI POOL
234 Discernment Network
30 Pairing Part
40 Tracker
41 2D Tracker
42 3D Converter
43 3D Tracker
50 Tail Beat Removing Part
51 Fork 3D Measuring Part
52 Plane Projecting Part
53 Approximation Straight Line Calculating Part
54 Frame Removing Part
60 Measuring Part
61 Optimal Frame Selecting Part
62 Snout Tip & Fork 3D Measuring Part
63 Body Depth Auxiliary Line Generating Part
64 Body Depth Auxiliary Line Projecting Part
65 Body Depth Measuring Part
70 Estimator
80 Output Part
90 Estimation Result DB
101 CPU
102 ROM
103 RAM
104 GPU
105 Video Memory
106 Recording-Medium Reading Part
200 Camera Part

## Claims

1. A computer program configured to cause a computer to perform processing, the processing comprising:
acquiring image data obtained by imaging an underwater life form;
inputting the acquired image data into a first trained model configured to output position data of a given element of the underwater life form in response to the input of the image data, and acquiring the position data of the given element of the imaged underwater life form;
inputting the acquired image data into a generating model configured to generate a segmentation image of the underwater life form in response to the input of the image data, and generating the segmentation image of the imaged underwater life form; and
estimating a size of the imaged underwater life form based on the position data of the given element and the segmentation image.

2. The computer program of claim 1, the processing comprising:
inputting the acquired image data into a second trained model configured to output first position data of the underwater life form, and second position data of the given element of the underwater life form in response to the input of the image data, and outputting the first position data and the second position data;
inputting image data of a second area including the second position data into the first trained model; and
inputting image data of a first area including the first position data into the generating model.

3. The computer program of claim 1 or 2, wherein the given element includes a caudal fin and a snout tip, the processing comprising calculating a body depth based on a straight line perpendicular to a straight line connecting the caudal fin with the snout tip.

4. The computer program of any one of claims 1 to 3, the processing comprising:
inputting image data captured by a stereoscopic camera into the first trained model, and calculating three-dimensional position of a snout tip and a fork based on the acquired position data of the given element;
generating a body depth auxiliary line based on the calculated three-dimensional positions; and
calculating a body depth by two-dimensionally projecting the generated body depth auxiliary line on the segmentation image.

5. The computer program of claim 4, the processing comprising calculating the body depth using the body depth auxiliary line at a position of a given ratio of a distance between the snout tip and the fork, from a position of the snout tip or the fork.

6. The computer program of any one of claims 1 to 5, the processing comprising:
inputting image data of each of a plurality of frames imaged by a stereoscopic camera into the first trained model, and calculating a three-dimensional position of a fork for every frame based on the acquired position data of the given element;
identifying a displacement of the fork for every frame based on the calculated three-dimensional position of the fork; and
selecting a frame for estimating the size of the underwater life form based on the identified displacement.

7. The computer program of any one of claims 1 to 6, the processing comprising:
displaying an estimated position of a caudal fin or a snout tip based on the position data outputted from the first trained model;
accepting a correction of the displayed estimated position of the caudal fin or the snout tip; and
retraining the first trained model based on the accepted corrected position, and image data when accepting the corrected position.

8. The computer program of any one of claims 1 to 7, the processing comprising:
displaying the segmentation image generated by the generating model;
accepting a correction of the displayed segmentation image; and
retraining the generating model based on the corrected segmentation image, and the image data when accepting the correction.

9. The computer program of any one of claims 1 to 8, the processing comprising displaying an image of the underwater life form cultivated in a fish preserve, with a fork length or a body depth.

10. The computer program of any one of claims 1 to 9, the processing comprising classifying accuracies of estimated sizes of a plurality of underwater life forms cultivated in a fish preserve into a plurality of ranks and displaying a number of underwater life forms for every classified rank.

11. The computer program of any one of claims 1 to 10, the processing comprising displaying a distribution of the size including at least one of a fork length or a body depth of a plurality of underwater life forms cultivated in a fish preserve.

12. A model generating method, comprising:
acquiring first training data including image data obtained by imaging an underwater life form and position data of a given element of the underwater life form;
acquiring second training data including the image data and a segmentation image of the underwater life form;
generating a first trained model based on the first training data to output a position data of the given element of an underwater life form in response to an input of an image data obtained by imaging the underwater life form; and
generating a generating model based on the second training data to generate a segmentation image of an underwater life form in response to an input of an image data obtained by imaging the underwater life form.

13. The model generating method of claim 12, comprising:
acquiring third training data including image data obtained by imaging an underwater life form, first position data of the underwater life form and second position data of the given element of the underwater life form; and
generating a second trained model based on the third training data to output a first position data of an underwater life form and a second position data of the given element of the underwater life form in response to an input of an image data obtained by imaging the underwater life form.

14. An estimating method, comprising:
acquiring image data obtained by imaging an underwater life form;
inputting the acquired image data into a first trained model configured to output position data of a given element of the underwater life form in response to the input of the image data, and acquiring the position data of the given element of the imaged underwater life form;
inputting the acquired image data into a generating model configured to generate a segmentation image of the underwater life form in response to the input of the image data, and generating the segmentation image of the imaged underwater life form; and
estimating a size of the imaged underwater life form based on the position data of the given element and the segmentation image.

15. An estimating device, comprising:
a first acquirer configured to acquire image data obtained by imaging an underwater life form;
a second acquirer configured to accept an input of the image data acquired by the first acquirer into a first trained model configured to output position data of a given element of the underwater life form in response to the input of the image data, and acquire the position data of the given element of the imaged underwater life form;
a generator configured to accept an input of the image data acquired by the first acquirer into a generating model configured to generate a segmentation image of the underwater life form in response to the input of the image data, and generate the segmentation image of the imaged underwater life form; and
an estimator configured to estimate a size of the imaged underwater life form based on the position data of the given element and the segmentation image.
